Europäisches Patentamt

European Patent Office

Office européen des brevets

(11) Veröffentlichungsnummer : **0 108 905**
**B1**

(12) **EUROPÄISCHE PATENTSCHRIFT**

(45) Veröffentlichungstag der Patentschrift :
21.01.87

(51) Int. Cl.⁴ : **F 02 B 37/12**

(21) Anmeldenummer : 83109855.3

(22) Anmeldetag : 03.10.83

(54) **Mittels Abgasturbolader aufgeladene Brennkraftmaschine.**

(30) Priorität : 02.11.82 CH 6355/82

(43) Veröffentlichungstag der Anmeldung :
23.05.84 Patentblatt 84/21

(45) Bekanntmachung des Hinweises auf die Patenterteilung : 21.01.87 Patentblatt 87/04

(84) Benannte Vertragsstaaten :
CH DE FR GB IT LI

(56) Entgegenhaltungen :
DE-A- 1 242 404
DE-A- 1 451 910
DE-C- 712 583

(73) Patentinhaber : BBC Aktiengesellschaft Brown, Boveri & Cie.
Haselstrasse
CH-5401 Baden (CH)

(72) Erfinder : Meier, Erwin
Im Hägeler 8
CH-5453 Remetschwil (CH)

Jouve, 18, rue St-Denis, 75001 Paris, France

## Beschreibung

Die Erfindung betrifft eine mittels Abgasturbolader aufgeladene Brennkraftmaschine, insbesondere Dieselmotor, mit einem Verdichter, der für volle Maschinendrehzahl ausgelegt ist und mit einer die Ladeluftleitung mit der Abgasleitung verbindenden Umblaseleitung, in welcher ein Regelorgan und ein Rückschlagventil angeordnet sind, sowie mit Mitteln zur unterschiedlichen Beaufschlagung der Abgasturbine.

Systeme der eingangs genannten Art sind bekannt, beispielsweise aus der DE-A-1 451 910. Um hier bei abnehmender Motordrehzahl den Ladedruck und das Drehmoment ansteigen zu lassen, um so die Drehmomentcharakteristik der idealen Zugkrafthyperbel anzupassen, wird die von der Ladeluftleitung zur Abgasleitung überströmende Luftmenge vergrössert. Da indes diese Massnahme allein nicht ausreicht, bestehen die Mittel zur unterschiedlichen Beaufschlagung der Abgasturbine darin, dass eine zusätzliche Energiemenge, die ebenfalls mit abfallender Motordrehzahl vergrössert wird, der Turbine zugeführt wird. Vorzugsweise geschieht dies in Form von separat erzeugter Druckluft, die mengenmässig nach Massgabe der umgeblasenen Luftmenge bez. der vom Motor jeweils benötigten Luftmenge einem besonderen Düsensegment der Abgasturbine zugeführt wird. Hierbei kann der Verdichter so ausgelegt sein, dass sein Wirkungsgradoptimum nahe der Motorschluckline bei maximaler Motordrehzahl liegt.

Eine weitere bekannte Lösung für Motoren mit niedrigem Verdichtungsverhältnis und hohen Ladedrücken ist das unter dem Namen HYPERBAR bekannte Verfahren. Hier wird der Abgasturbine neben den Auspuffgasen des Verbrennungsmotors zusätzliche umgeblasene Ladeluft zugeführt, welche durch Kraftstoffverbrennung in einer vor der Turbine angeordneten Brennkammer aufgeheizt wird.

Nachteilig bei beiden bekannten Verfahren ist der erhöhte Energieverbrauch im ganzen Lastbereich.

Der Erfindung liegt deshalb die Aufgabe zugrunde, bei einem hochaufgeladenen Verbrennungsmotor der eingangs genannten Art, welcher mit Stauaufladung oder einem gleichdruckähnlichen Prinzip arbeitet, den Ladedruck bei Teillast zu erhöhen ohne Zuhilfenahme von Fremdenergie. Als « gleichdruckähnlich » werden hier bekannte Systeme wie das MULTISTOSS-Verfahren oder das unter der Bezeichnung MPC (Modular Pulse Converter) bekannte Verfahren bezeichnet.

Erfindungsgemäss wird diese Aufgabe durch die kennzeichnenden Merkmale des Patentanspruchs gelöst.

Als Turbinen-Ersatzquerschnitt gilt eine gleichwertige Oeffnung für die Hintereinanderschaltung von Turbinen Leit- und Laufrad (Näheres hierzu s. Buch von K. Zinner « Aufladung von Verbrennungsmotoren », 2. Auflage, Springer Verlag Berlin-Heidelberg-New York 1980, Abschnitt 6.3-.3).

Zwar ist es bereits aus der eingangs genannten DE-A-1 451 910 bekannt, eine Gasturbine mit getrennten Düsenkammern vorzusehen. Jedoch dienen diese lediglich zur Aufnahme der Abgase verschiedener abgasseitig zusammengefasster Zylinder. Eine völlige Abschaltung oder Drosselung einer oder mehrerer dieser Kammern, welche Massnahmen zu einer variablen Ersatzdüsenfläche führen würden, ist nicht möglich.

Hingegen ist die eigentliche Verminderung des Zuströmquerschnittes einer Turboladergasturbine schon lange bekannt. Bereits BUECHI hat 1923 (CH-Patent 107 453) eine Regelvorrichtung gezeigt und beschrieben, über die die Abgase in die Turbine gelangen und über deren Verstellung die Turbinenleistung vergrössert oder verkleinert werden kann. Die Art der dort gezeigten Vorrichtung entspricht einer Sektorregulierung.

Eine modernere Lösung zeigt beispielsweise die DE-A-28 40 201. Hier wird im Zuströmkanal einer Axialturbine der Querschnitt mittels Zwischenwänden in mehrere ringförmige, radial übereinander angeordnete Teilkanäle unterteilt. Diese Teilkanäle sind je nach Betriebszustand der Brennkraftmaschine zu- oder abschaltbar. Die in jedem Leistungsbereich optimale Anströmung der Turbine soll hierbei zu einem guten Beschleunigungsverhalten führen. Diese bekannte Lösung bietet indes keine Abhilfe für die Tatsache, dass bei hochaufgeladenen Motoren und bei Verwendung eines Turboladers mit hohem Gesamtwirkungsgrad anlässlich der Reduzierung des Turbinen-Ersatzquerschnittes das Verdichterdruckverhältnis unzulässig hoch werden kann.

Der Vorteil der Erfindung ist darin zu erblicken, dass mit relativ einfachen Mitteln der Propellerteillastbetrieb ohne Beeinträchtigung der Betriebskennwerte bei Vollast verbessert wird. Bei reduzierter Motordrehzahl kann der Ladeluftdruck so hoch angehoben werden, dass selbst höhere effektive Mitteldrücke erreicht werden, als dies nach dem Propellergesetz erforderlich wäre.

In der Zeichnung ist ein Ausführungsbeispiel der Erfindung vereinfacht dargestellt.

Es zeigt :

Figur 1 schematisch eine aufgeladene 4-Zylinder Brennkraftmaschine ;

Figur 2 ein Laderkennfeld ;

Figur 3 ein Schaubild Verbrennungsluftverhältnis in Funktion des Turbinen-Ersatzquerschnittes ;

Figur 4 ein Schaubild Abgastemperatur in Funktion des Turbinen-Ersatzquerschnittes ;

Figur 5 ein Schaubild Ventilsitztemperatur in Funktion des Turbinen-Ersatzquerschnittes.

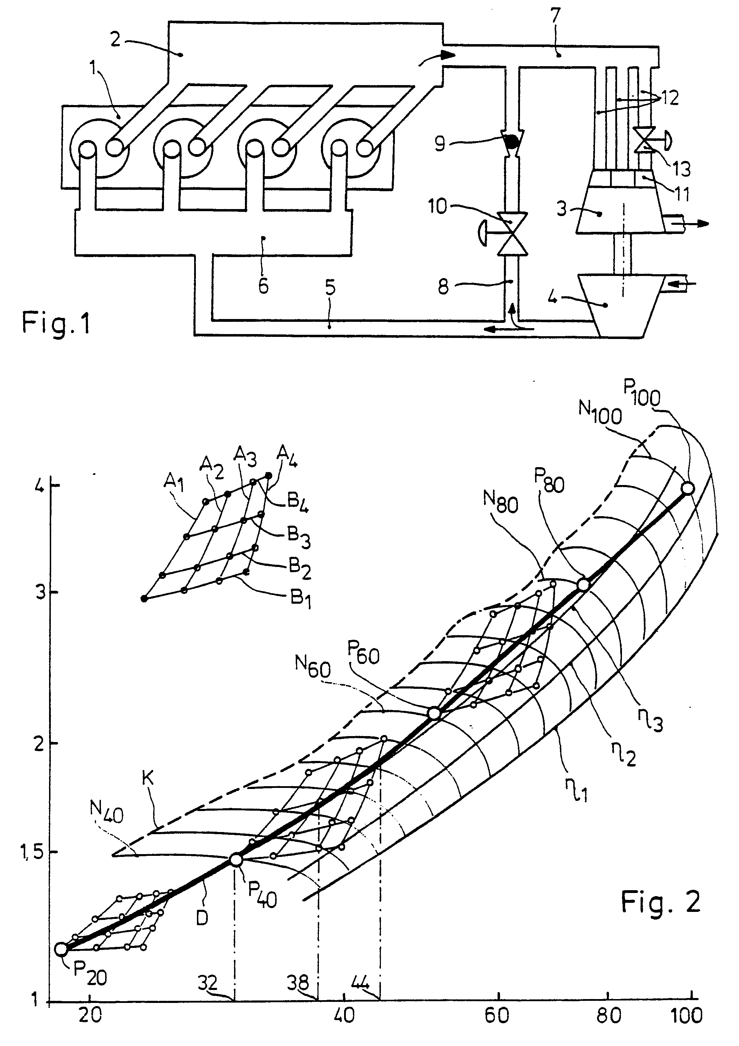

Die in Fig. 1 gezeigte Brennkraftmaschine sei ein mittelschnellaufender Viertakt-Dieselmotor 1, wie er für Schiffsantriebe Verwendung findet. Die Auspuffgase der einzelnen Zylinder strömen in einen gemeinsamen Abgassammelbehälter 2, in dem sich die Druckstösse vergleichmässigen. Mit nahezu konstantem Druck gelangen die Abgase über die Abgasleitung 7 in die Turbine 3, die folglich nach dem Stauverfahren arbeitet. Der von der Turbine 3 angetriebene Verdichter 4 fördert die atmosphärische angesaugte und komprimierte Luft über die Ladeluftleitung 5 in einen Ladeluftsammelbehälter 6, aus dem sie den einzelnen Zylindern zuströmt.

Für den Umblasebetrieb ist zwischen die Ladeluftleitung 5 und die Abgasleitung 7 eine Umblaseleitung 8 geschaltet, in welcher ein Rückschlagventil 9 und ein Regelorgan 10 angeordnet sind. Erstere dient dazu, bei offenem Regelorgan 10 das Ueberströmen von Abgas in die Ladeluftleitung 5 zu verhindern bei Zuständen, in denen der Abgasdruck höher ist als der Ladedruck. Die Umblaseleitung 8 resp. das Regelorgan 10 sind zur Aufnahme von etwa 30 % der Abgasmenge dimensioniert. Die Steuerung und/oder die Betätigung des Regelorgans erfolgt in an sich bekannter Weise mittels einer Prozessgrösse oder einer Betriebsgrösse wie beispielsweise Motordrehzahl, Ladedruck, Regelstangenweg der Einspritzpumpe usw.

Der Verdichter 4 ist ein Radialverdichter und ist derart ausgelegt, dass sein Wirkungsgradoptimum bei maximaler Motorleistung und -drehzahl liegt und er nahe an der Pumpgrenze arbeitet.

Beim gewählten Motor für Schiffsantrieb ist eine Betriebslinie für Propellercharakteristik zu fahren, was bedeutet, dass mit fallender Drehzahl auch der Massendurchsatz abnimmt und ohne Gegenmassnahme der Ladedruck ziemlich stark fallen würde. Das Umblasen allein, so zweckmässig es auch geregelt sein mag, vermag hier keine Abhilfe zu schaffen. Wie später nachzuweisen sein wird, kann durch diese Massnahme allein der Ladedruck nur unwesentlich erhöht werden, weshalb ja auch die eingangs erwähnten, bekannten Lösungen Fremdenergie zuführen.

Erfindungsgemäss wird nun auch die Turbine 3 für volle Motordrehzahl und -leistung ausgelegt. Hieraus ergibt sich, dass im Auslegungsbereich, d. h. im oberen Last- und Drehzahlbereich des Motors, die Umblaseleitung 8 verschlossen bleibt. Darüberhinaus ist für die Turbine ein variabler Ersatzquerschnitt vorgesehen. Dies kann beispielsweise in der Turbine selbst mit verstellbaren Leitschaufeln oder mit zu- und abschaltbaren radialen Kreisringsektoren geschehen. Bei handelsüblichen Turbinen, welche mit mehreren getrennten Gaseintritten versehen sind, geschieht dies durch Abschalten eines oder mehrerer Düsenringsektoren. Letzlich ist die Wahl eine Frage der Wirtschaftlichkeit und der Betriebssicherheit. So ist unter anderm darauf zu achten, dass die bei Schwerölbetrieb unvermeidlichen Schlackenablagerungen nicht die Verstellbarkeit beeinträchtigen oder den Wirkungsgrad allzu stark beeinflussen.

Der Turbolader-Gesamtwirkungsgrad hat nämlich einen entscheidenden Einfluss bei hochaufgeladenen Motoren, deren Abgasturbine mit veränderlichem Ersatzquerschnitt arbeitet. Verringert man dort die Ersatzdüsenfläche, so steigt auch bei solchen Systemen das Verdichterdruckverhältnis an, allerdings nur, wenn das Spüldruckgefälle über dem Motor nicht wesentlich vermindert wird, d. h. nur wenn der Gesamtwirkungsgrad hoch ist. Ist Letzterer zu niedrig, so bewirkt die Abnahme des Ersatzquerschnittes lediglich ein Zusammenbrechen des Spülluftdurchsatzes ohne gleichzeitige Erhöhung des Verdichterdruckverhältnisses.

Aus alldem ergibt sich, dass eine Turbine mit variablem Ersatzquerschnitt im ganzen Verstellbereich einen sehr hohen Wirkungsgrad aufweisen muss.

Im vorliegenden Beispiel weist die Turbine 3 drei über den Umfang angeordnete Düsensegmente 11 auf, die je über eine Leitung 12 angespeist werden. Eine dieser Leitungen ist unmittelbar vor der Turbine mit einem Absperrorgan 13 versehen, was eine Reduktion der beaufschlagten Düsenfläche um 33,3 % ergibt. Sollte eine derartig grosse, sprunghafte Veränderung unerwünscht sein, so kann selbstverständlich ein abgeändertes Turbineneintrittsgehäuse mit einer Mehrzahl von kleinen, getrennten Düsenringsektoren zur Anwendung gelangen. Eine feine Abstufung des beaufschlagten Querschnittes kann dann durch die sukzessive Abschaltung von mehreren dieser Sektoren erfolgen.

Im Teillastbereich wird nun durch gleichzeitiges Oeffnen der Umblaseleitung und Verändern der Düsenfläche angestrebt, den Betriebspunkt möglichst nahe an die Pumpgrenze zu verlegen, d. h. grösstmöglichen Ladedruck mit bestmöglichem Wirkungsgrad zu erzielen.

In Fig. 2 ist in einem Laderkennfeld veranschaulicht, wie sich die Umblasregelung und die Variation des Turbinen-Ersatzquerschnittes vorteilhaft ergänzen.

Auf der Ordinate ist der Ladedruck in (bar) und auf der Abzisse die geförderte Ladeluftmenge in ( %) aufgetragen. Die in gestrichelter Linie dargestellte Pumpgrenze K trennt den instabilen, unbefahrbaren Bereich vom stabilen Bereich des Verdichters. $\eta_1$, $\eta_2$ und $\eta_3$ sind die Muschelkurven gleichen Verdichterwirkungsgrades, wobei im vorliegenden Beispiel $\eta_1$ = 65 % und $\eta_3$ = 82 % entspricht. Mit $N_{40}$, $N_{60}$, $N_{80}$ und $N_{100}$ sind die Linien konstanter Drehzahl aufgetragen, wobei die Drehzahl in ( %) den jeweiligen Indices entspricht.

Mit D ist die Betriebslinie bezeichnet, die erfindungsgemäss in optimaler Distanz zur Pumpgrenze K verläuft. Diese effektive Betriebslinie berücksichtigt bereits den durch das teilweise Schliessen der Düsenfläche bedingten Wirkungsgradabfall.

Am Betriebspunkt bei 40 % Motorleistung sei im folgenden die Wirkungsweise der Erfindung erläutert. Der Punkt $P_{40}$ entspräche dabei zunächst einer Fahrweise mit voll offener Turbine und vollständig geschlossener Umblaseleitung. Würde bloss die beaufschlagte Turbinenfläche verringert, so ergäbe sich mit steigender Fördermenge eine Erhöhung des Ladedruckes

nach Linie $A_1$, wodurch sich der Betriebspunkt in unzulässigerweise der Pumpgrenze nähert. Würde hingegen lediglich die Umblaseleitung geöffnet, so ergäbe sich eine nur schwache Druckerhöhung nach Linie $B_1$.

Der Zusammenhang beider Linien A und B ist in dem im labilen Bereich skizzierten Feld erläutert. Die von links unten steil nach rechts oben verlaufenden Linien stellen unterschiedliche Bypassöffnungen SB im Verhältnis zum jeweils offenen Turbinenquerschnitt ST dar. Die linke Linie $A_1$ steht für den vollständig geschlossenen Bypass, d. h. SB/ST=0.

Die Linien $A_2$, $A_3$ und $A_4$ stehen jeweils für die Querschnittsverhältnisse SB/ST = 0,1, 0,2 und 0,3. Die von $A_1$ ausgehenden Linien $B_1$ bis $B_4$ bezeichnen jeweils den Oeffnungsgrad der Turbine, wobei $B_1$ für 100 %, $B_2$ für 90 %, $B_3$ für 80 % und $B_4$ für 70 % beaufschlagte Düsenfläche steht.

Um die angestrebte Betriebslinie fahren zu können, ist es ersichtlich, dass beide Massnahmen gleichzeitig zu ergreifen sind. Im gezeigten Betriebspunkt geschieht die Erhöhung der Fördermenge von etwa 32 % auf 44 % in der Weise, dass bei etwa 38 % Ladeluftmenge der Turbinen-Ersatzquerschnitt 80 % und der offene Querschnitt der Umblaseleitung 10 % des Turbinenquerschnitts beträgt.

Selbstverständlich kann der ganze, durch das Parallelogramm eingegrenzte Bereich auf beliebige Weise durchfahren werden, was letztlich eine rein regeltechnische Aufgabe ist. Immer wird man jedoch danach trachten, im Bereich stabiler Strömung und bestmöglichem Wirkungsgrad zu fahren.

Der in den Lastpunkten $P_{20}$, $P_{40}$ und $P_{60}$ dargestellte, verschieden steile Verlauf der Linien A oder B ist unter anderem eine Folge der dann vorherrschenden, unterschiedlichen Abgastemperaturen und des Turbolader-Gesamtwirkungsgrades. Zu bemerken ist noch, dass im Bereich von 80 % bis 100 % Motorleistung eine Betätigung der Regelung nicht mehr erforderlich ist, da hier der Ladedruck genügend hoch ist und der Turbolader ohnehin in seinem Auslegungsbereich arbeitet.

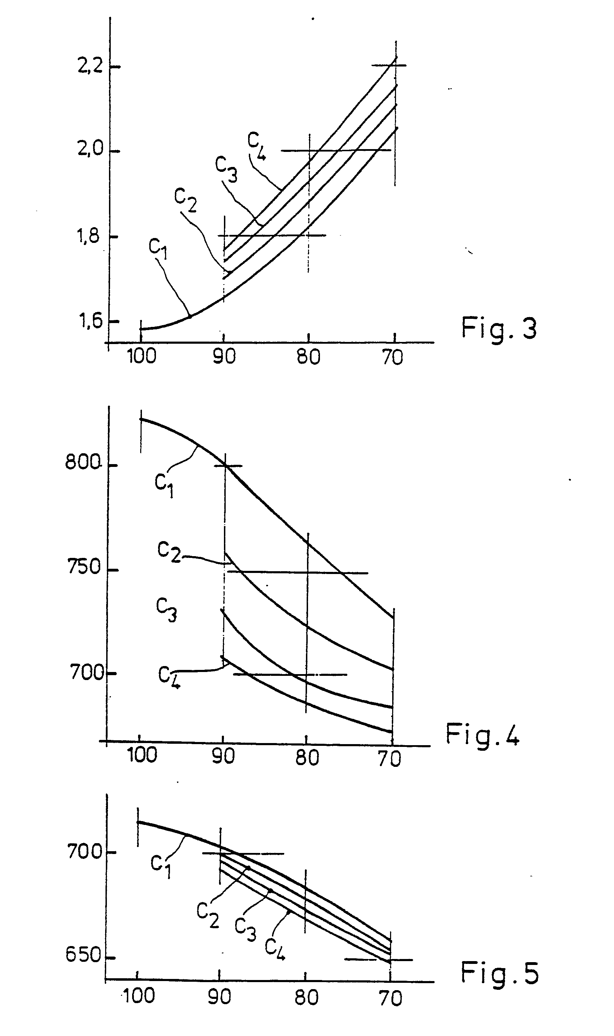

Die Schaubilder in Fig. 3, 4 und 5 zeigen die hervorragenden Ergebnisse, die mit der erfindungsgemässen Massnahme zu erzielen sind und zwar wiederum für den Betriebspunkt bei 40 % Motorleistung.

Auf der Abzisse ist jeweils der beaufschlagte Turbinenquerschnitt in ( %) angegeben. Auf den Ordinaten ist in Fig. 3 das Verbrennungsluftverhältnis $\lambda_Z$, in Fig. 4 die Abgastemperatur in (Kelvin) und in Fig. 5 die für den Motorhersteller überaus wichtige Ventilsitztemperatur des Auslassventils in (Kelvin) aufgetragen. Parameter ist wiederum das Oeffnungsverhältnis des Bypassquerschnitts SB zum jeweils beaufschlagten Turbinenquerschnitt ST. Mit $C_1$ sind in den 3 Diagrammen jeweils die Linien bezeichnet, bei denen die Umblaseleitung geschlossen ist. $C_2$, $C_3$ und $C_4$ entsprechen den Verhältnissen SB/ST = 0,1, 0,2 resp. 0,3.

Erkennbar ist ohne weiteres der vorteilhafte, unmittelbar funktionelle Zusammenhang der gleichzeitigen Massnahmen « Reduzierung der Düsenfläche » und « Oeffnen der Umblaseleitung » bei Teillast. Es versteht sich, dass durch das erhöhte Verbrennungsluftverhältnis eine entsprechende Reduktion des indizierten Kraftstoffverbrauchs die Folge ist.

## Patentanspruch

Mittels Abgasturbolader aufgeladene Brennkraftmaschine (1), insbesondere Dieselmotor, mit einem Verdichter (4), der für volle Maschinendrehzahl ausgelegt ist und mit einer die Ladeluftleitung (5) mit der Abgasleitung (7) verbindenden Umblaseleitung (8), in welcher ein Regelorgan (10) und ein Rückschlagventil (9) angeordnet sind, sowie mit Mitteln zur unterschiedlichen Beaufschlagung der Abgasturbine (3), dadurch gekennzeichnet, dass auch die Abgasturbine (3) für volle Maschinenleistung und -drehzahl ausgelegt ist und mit einem variablen Turbinen-Ersatzquerschnitt versehen ist in Form einer an sich bekannten Sektorregulierung oder veränderlicher Geometrie des Turbinenleitapparates.

## Claim

Exhaust gas turbo-charger supercharged internal combustion engine (1), in particular a diesel motor, having a compressor (4) which is designed for the full engine speed, and having a bypass duct (8) connecting the supercharged air duct (5) to the outlet gas duct (7), in which bypass duct are located a control device (10) and a non-return valve (9), and also having means for varying the admission to the exhaust gas turbine (3), characterized in that the exhaust gas turbine (3) is also designed for full engine power and speed and is provided with a variable equivalent turbine area in the form of a known sector control or variable geometry of the turbine guide vane equipment.

## Revendication

Moteur à combustion interne (1) suralimenté par un turbo-compresseur à gaz d'échappement, en particulier moteur Diesel, avec un compresseur (4) qui est conçu pour la pleine vitesse de rotation du moteur et avec une conduite de dérivation (8) reliant la conduite d'air d'admission (5) à la conduite des gaz d'échappement (7) et dans laquelle sont montés un organe de réglage (10) et un clapet de non retour (9), ainsi qu'avec des moyens pour faire varier l'alimentation de la turbine à gaz d'échappement (3), caractérisé en ce que la turbine à gaz d'échappement (3) est également conçue pour la pleine puissance et la pleine vitesse de rotation du moteur et est pourvue d'une section équivalente variable de la

7　0 108 905　8

turbine sous la forme d'une régulation par secteurs en soi connue ou d'une géométrie variable de l'appareil directeur de la turbine.

Fig.1

Fig. 2

Fig. 3

Fig. 4

Fig. 5